# EUROPEAN PATENT SPECIFICATION

(11) **EP 1 370 844 B1**
(45) Date of publication and mention of the grant of the patent: **26.04.2017**
(21) Application number: 02718726.9
(22) Date of filing: 20.03.2002
(51) Int. Cl.: G01M 3/20, G01M 3/04

(54) **METHOD AND DEVICE AT TESTING FOR LEAKS AND LEAKAGE FINDING**
VERFAHREN UND EINRICHTUNG ZUM PRÜFEN AUF LECKS UND ZUR LECKFINDUNG
PROCÉDÉ ET DISPOSITIF D'ESSAI D'ÉTANCHÉITE ET DE RECHERCHE DES FUITES

(30) Priority: 21.03.2001 SE 0100983
(43) Date of publication of application: 17.12.2003
(73) Proprietor: Inficon AB, 581 02 Linköping (SE)
(72) Inventor: ENQUIST, Fredrik, S-589 23 Linköping (SE); NYLANDER, Claes, S-587 21 Linköping (SE)
(74) Representative: Valea AB
(86) International application number: PCT/SE2002/000546
(87) International publication number: WO 2002/075268

(56) References cited:
- DE-A1- 19 813 432
- GB-A- 2 338 072
- US-A- 3 771 349
- US-A- 4 477 986
- US-A- 4 577 490

## Description

The present invention relates to a method according claim 1. The invention also relates to a detection arrangement according to claim 7.

In leakage testing and leak detection using tracer gas, an object that is to be tested for leakage is filled with a gas or gas mixture, which contains at least one constituent detectable by means of a leakage detector. This translates the presence of the traceable constituent, normally referred to as the tracer gas, into a digital, electrical, acoustic or optical signal.

Tracer gas is often used both to detect the presence and size of a leak and to locate a leak once detected. This is done by using the detector to register an increased content of the traceable substance in the vicinity of or in direct proximity to the leak.

For the detector to be able to register the leakage, at least a proportion of the tracer gas escaping must come into direct contact with the gas-sensitive sensor of the leakage detector. Currently two main principles are known for delivering the escaping tracer gas to the gas-sensitive sensor of the detector:
a) A suction pipe with a nozzle (often referred to as a probe) is applied between the leakage site and the gas sensitive sensor. When the inlet orifice of the suction pipe is sufficiently close to the leakage site, tracer gas is sucked in and delivered through the suction pipe to the sensor sensitive to the tracer gas, the detector emitting a signal detectable by an operator.
b) The gas-sensitive sensor is located so close to the leakage site that the tracer gas can reach the sensor sensitive to the tracer gas, primarily by diffusion, the detector emitting a signal detectable by the operator.

The method according to a) above also allows the size of the leak to be quantified. The term quantification here signifies measurement of the magnitude of the flow of tracer gas passing through the leak. Quantification is possible if the suction pipe picks up all of the tracer escaping through the leak. The concentration of tracer gas in the suction pipe and hence at the sensor sensitive to the tracer gas is in that case proportional to the ratio between the flow in the suction pipe and the flow of tracer gas from the leak. For this method to serve its purpose of permitting quantification, the suction flow must be greater than the maximum leakage flow that the arrangement is capable of measuring and in all cases large enough to create the necessary flow of air from the surroundings into the orifice of the probe, which is needed in order to force the escaping tracer gas to be entrained into the orifice of the probe. This inevitably means a certain dilution of the tracer gas, which limits the ability of the arrangement to detect very small leaks.

US 3, 377, 349 discloses a portable moisture leak detector comprising an elongate tubular member in which a sensor is positioned. A fan is used to provide a suction flow within the elongate tubular member.

US 5, 553, 483 discloses a system for detecting a leak in an object which is positioned in a test chamber.

### Disadvantages of known methods/arrangements:

- long suction pipe between leakage site and detector means delay in detecting the leak.
- the suction flow needed for quantification reduces the sensitivity of the method.
- the method according to b) above only affords limited scope for quantification, since the concentration of tracer gas in front of the leakage site varies greatly with the distance from the leak.

### Object of the invention:

An object of the present invention is to provide an improved method of leakage detection and leakage measurement. The said object is achieved by a method of the generic type having the features in the characterising part of claim 1. An arrangement according to the invention is characterised by the characterising part of claim 7.

The invention affords several advantages in that it provides a choice between maximum possible sensitivity on the one hand and measurement of the size of the leak on the other. Switching between these two methods is achieved quite simply by opening or shutting off the flow in the suction pipe.

The shorter response time that is obtained by placing the gas-sensitive sensor close to the end of the probe also greatly improves the user-friendliness in that the operator gets a more direct feedback of how the orifice of the probe is moving in relation to the site of the leak.

All in all, this affords great time and cost savings when detecting leaks in manufacturing industry and in the servicing and repair of mechanical equipment.

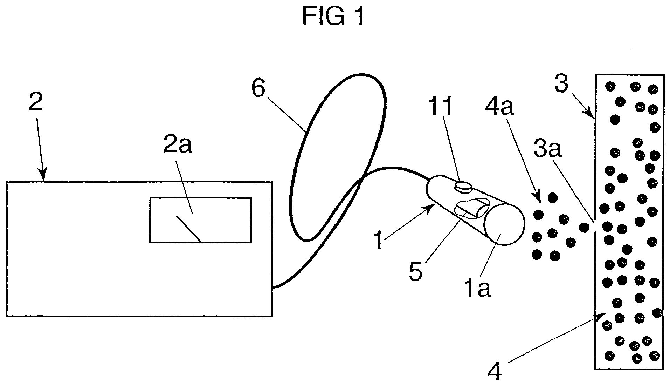

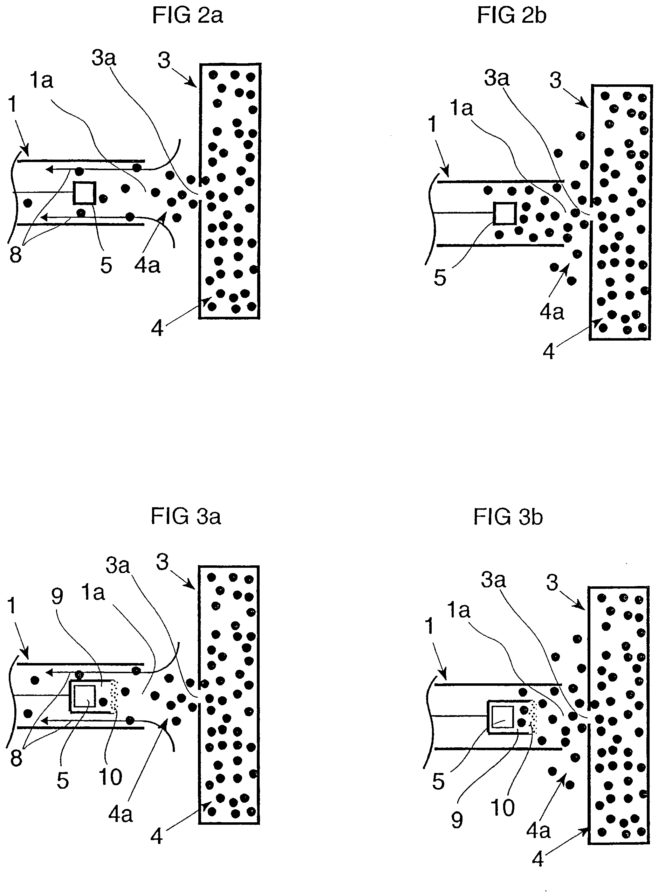

Further characteristics and advantages of the invention will be evident from the subordinate claims and from the following description with reference to the drawing, of which Figure 1 shows a diagram of equipment used in the tracing, detection and quantification of leaks, comprising a probe of the type described in this application. Figures 2a and 2b illustrate how the sensor sensitive to the tracer gas is located in the probe so close to the orifice that the tracer gas can reach the probe sensor within so short a time that the method/the arrangement amply fulfils its purpose of rapidly detecting the presence of the leak. Figure 2a shows a suction flow into the probe and past the sensor sensitive to the tracer-gas. In Figure 2b the said suction flow has been shut off and the orifice of the probe has instead been applied so close to the leak that the tracer gas can reach the sensor by diffusion.

Figures 3a and 3b show a variant of the method/the arrangement described in Figures 2a and 2b, in which the sensor sensitive to the tracer gas has been located in a space inside the probe that is separated from the main flow path of the suction flow, directly behind the orifice of the probe. The difference between the Figures 3a and 3b is the same as the difference between the Figures 2a and 2b, that is the presence or the absence of suction flow.

In Fig. 1, 1 generally denotes a probe, the front part of which constitutes the orifice 1a of the probe. The probe 1 is connected to a measuring instrument 2 having one or more different indicators 2a, which give a digital, electrical, acoustic or optical signal corresponding to the concentration of tracer gas in the orifice 1a. 3 denotes an object, in the wall of which there is a leak 3a. The object is pressurised by a tracer gas 4, a proportion 4a of which has passed through the leak 3a and is therefore situated outside the object 3.

Figures 2a, 2b and 3a, 3b again show the probe 1 with its orifice 1a and the object 3, which is pressurised by tracer gas 4 and has a leak 3a, through which tracer gas 4a is leaking out and mixing with the atmosphere closest to the leak 3a.

In order to detect the presence of the tracer gas 4a and thereby to locate and/or quantify the leak 3a, a sensor is required, which is designed to translate a tracer gas flow or a tracer gas concentration into a signal, which can be interpreted by the measuring instrument 2. The sensor 5 may be located in a separate space 9 in the probe 1, as is the case in Figures 3a and 3b, but it may also be located directly in the probe 1, as shown in Figures 2a and 2b. In the latter case, a certain contamination of the sensor 5 must be expected, together with a certain temperature influence, which if the sensor 5 is temperature-sensitive, may give rise to incorrect signals from the detector 2. Figures 2a and 3a show how the method/arrangement described are used with activated suction flow 8, which means that if the orifice 1a of the probe is near enough to the leak 3a, all escaping tracer gas, indicated by a mass of dots, is sucked into the orifice 1a of the probe 1. The concentration of tracer gas 4a in the orifice 1a of the probe is then proportional to the size of the leak 3a, which allows the leak to be quantified. The concentration of tracer gas 4a in the orifice 1a of the probe is also inversely proportional to the size of the present suction flow 8, which means that the concentration of tracer gas in the orifice 1 a of the probe 1 is lower than if the suction flow 8 were zero. This situation is due to the fact that the air, which is sucked in together with the tracer gas 4a escaping through the leak 3a, dilutes the tracer gas to a lower concentration.

Figures 2b and 3b show how the method/arrangement described are used with the suction flow shut off. The tracer gas 4a in this case gets into the probe 1 largely by diffusion, which means that if the orifice of the probe is brought close enough to the leak, the concentration of tracer gas in the orifice 1a of the probe 1 will be higher than if the suction flow were activated. This is due to the fact that the tracer gas is not diluted by air, which would have been sucked in together with the tracer gas 4a escaping, when the suction flow is activated.

Using the method/the arrangement in this latter way reduces the accuracy in quantification of the leak. By setting the operating control 11, as shown in Figure 1, for regulating or shutting off the suction flow, it is possible to select between optimum quantification and maximum sensitivity in each individual instance.

In Figure 3a and 3b, the sensor has been enclosed in a space 9 designed to protect the sensor from distorting contamination and temperature effects. The concentration of tracer gas in this space 9 is in equilibrium with the concentration of tracer gas in the orifice 1a of the probe. The tracer gas moves into and out of the space 9 through at least a part of the boundary surface of the space in such a way that dirt particles cannot reach the sensor 5 and that the sensor is not exposed to distorting temperature effects. This can be done, for example, in that a part of the boundary surface of the space 9 consists of a means 10, which is designed so that the tracer gas 4a can pass into and out of the space 9 solely by diffusion.

Either hydrogen (H₂) or helium (He) is preferably used as tracer gas.

## Claims

1. Method for the tracing, detection and quantification of a leak (3a) in an object (3) using a tracer gas, by means of which the object (3) is pressurised, use being made of a probe (1) provided with an orifice, through which a suction flow (8) is established that is capable of delivering tracer gas (4a) present in connection with the leak (3a) to a sensor (5), which is configured to be sensitive to the tracer gas and by means of which the presence of tracer gas can be detected, **characterised in that** the sensor (5) sensitive to the tracer gas is located in the probe (1), so close to the orifice (1a) such that the tracer gas can reach the sensor sensitive to the tracer gas by diffusion, and wherein the method further comprises regulating or shutting off the suction flow (8).

2. Method according to claim 1, **characterised in that,** where increased sensitivity to tracer gas is required, the orifice (1a) of the probe (1) is applied in such close proximity to the leak (3a) that the tracer gas (4a) can reach the sensor (5) rapidly by diffusion, and that the suction flow (8) is thereby reduced, the concentration of the tracer gas collected in the probe increasing when it is no longer diluted to the same extent by ambient air that is sucked into the probe (1) together with the tracer gas (4a), and the maximum concentration and hence sensitivity being obtained when the suction flow (8) is zero.

3. Method according to either of claims I or 2, **characterised in that** the sensor (5) is located in a space (9) separated from the main flow path of the flow (8), in such a way that the tracer gas reaches the sensor (5) primarily by diffusion through the boundary surface that separates the space (9) for the sensor (5) from the main flow path of the suction flow (8).

4. Method according to any of claims 1 to 3, **characterised in that** the tracer gas is hydrogen (H₂).

5. Method according to any of claims 1 to 3, **characterised in that** the tracer gas is helium (He).

6. Method according to any of claims 3 to 5, **characterised in that** the suction flow (8) is substantially established concentrically around the longitudinal axis of the space (9) surrounding the sensor (5).

7. Detection arrangement (1,2) working with detector gas and designed in the case of an object (3) pressurised by the tracer gas to detect, trace and quantify a leak (3a) in the object (3) by establishing an external, increased presence of the tracer gas in connection with the leak (3a), comprising a probe (1) provided with an orifice, through which a suction flow (8) is established that is capable of delivering tracer gas (4a) present in connection with the leak (3a) to a sensor (5), which is sensitive to the tracer gas and designed to detect the presence of tracer gas, **characterised in that** the sensor (5) sensitive to the tracer gas is located in the probe (1), so close to the orifice (1a), such that the tracer gas can reach the sensor sensitive to the tracer gas by diffusion, and **in that** the arrangement further comprises an operating device (11) arranged to regulate or shut off the suction flow (8).

8. Arrangement according to claim 7, **characterised in that** the arrangement comprises an operating device (11) fitted to or in connection with the probe (1) and designed to control the suction flow (8), so that the orifice (1a) of the probe (1) is situated in such close proximity to the leak (3a) that the tracer gas (4a) can reach the sensor (5) rapidly by diffusion, and when there is a need for increased sensitivity to tracer gas the suction flow (8) is reduced, the concentration of the tracer gas collected in the probe increasing when it is no longer diluted to the same extent by ambient air that is sucked into the probe (1) together with the tracer gas (4a), and the maximum concentration and hence sensitivity being obtained when the suction flow (8) is completely shut off by means of the operating device (11).

9. Arrangement according to either of claims 7 or 8, **characterised in that** the sensor (5) is located in a space (9) separated from the main flow path of the suction flow

## Patentansprüche

1. Verfahren zur Verfolgung, Detektion und Quantifizierung eines Lecks (3a) in einem Objekt (3) unter Verwendung eines Tracergases, mittels welchem der Gegenstand (3) unter Druck gesetzt wird, wobei eine Sonde (1) verwendet wird, welche mit einer Öffnung versehen ist, durch welche eine Saugströmung (8) aufgebaut wird, die in der Lage ist, in Verbindung mit dem Leck (3a) vorhandenes Tracergas (4a) an einen Sensor (5) zu überbringen, der so konfiguriert ist, dass er für das Tracergas empfindlich ist und mittels welchem das Vorhandensein von Tracergas detektiert werden kann, **dadurch gekennzeichnet, dass** der Sensor (5), der für das Tracergas empfindlich ist, so nahe an der Öffnung (1a) in der Sonde (1) angeordnet ist, dass das Tracergas den für das Tracergas empfindlichen Sensor mittels Diffusion erreichen kann, und wobei das Verfahren ferner Steuern oder Absperren der Saugströmung (8) umfasst.

2. Verfahren nach Anspruch 1, **dadurch gekennzeichnet, dass**, soweit erhöhte Empfindlichkeit gegenüber Tracergas benötigt wird, die Öffnung (1a) der Sonde (1) so nahe an dem Leck (3a) angebracht wird, dass das Tracergas (4a) den Sensor (5) schnell durch Diffusion erreichen kann, und dadurch die Saugströmung (8) reduziert wird, wobei die Konzentration des in der Sonde gesammelten Tracergases zunimmt, wenn es nicht mehr in demselben Ausmaß durch Umgebungsluft verdünnt wird, die zusammen mit dem Tracergas (4a) in die Sonde (1) gesaugt wird, und die maximale Konzentration und damit Empfindlichkeit erreicht wird, wenn die Saugströmung (8) Null ist.

3. Verfahren nach einem der Ansprüche 1 oder 2, **dadurch gekennzeichnet, dass** der Sensor (5) in einem vom Hauptströmungsweg der Strömung (8) getrennten Raum (9) in solch einer Weise angeordnet ist, dass das Tracergas den Sensor (5) primär durch Diffusion durch diejenige Grenzfläche erreicht, die den Raum (9) für den Sensor (5) von dem Hauptströmungsweg des Saugstroms (8) trennt.

4. Verfahren nach einem der Ansprüche 1 bis 3, **dadurch gekennzeichnet, dass** das Tracergas Wasserstoff (H₂) ist.

5. Verfahren nach einem der Ansprüche 1 bis 3, **dadurch gekennzeichnet, dass** das Tracergas Helium (He) ist.

6. Verfahren nach einem der Ansprüche 3 bis 5, **dadurch gekennzeichnet, dass** die Saugströmung (8) im Wesentlichen konzentrisch um die den Sensor (5) umgebende Längsachse des Raumes (9) aufgebaut wird.

7. Detektoranordnung (1, 2), die mit Detektorgas arbeitet und im Falle eines mit dem Tracergas druckbeaufschlagten Objektes (3) konzipiert zum Detektieren, Verfolgen und Quantifizieren eines Lecks (3a) im Objekt (3) durch Aufbauen einer äusseren, erhöhten Anwesenheit des Tracergases in Verbindung mit dem Leck (3a), umfassend eine Sonde (1), welche mit einer Öffnung versehen ist, durch welche eine Saugströmung (8) aufgebaut wird, die in der Lage ist, in Verbindung mit dem Leck (3a) vorhandenes Tracergas (4a) an einen Sensor (5) zu überbringen, der für das Tracergas empfindlich ist und dafür konzipiert, das Vorhandensein von Tracergas zu detektieren, **dadurch gekennzeichnet, dass** der Sensor (5), der für das Tracergas empfindlich ist, so nahe an der Öffnung (1a) in der Sonde (1) angeordnet ist, dass das Tracergas den für das Tracergas empfindlichen Sensor mittels Diffusion erreichen kann, und dass die Anordnung ferner eine Bedienungseinrichtung (11) aufweist, die zum Steuern oder Absperren der Saugströmung (8) angeordnet ist.

8. Anordnung nach Anspruch 7, **dadurch gekennzeichnet, dass** die Anordnung eine an der Sonde (1) angebrachte oder mit dieser verbundene Bedienungseinrichtung (11) umfasst, die dazu konzipiert ist, die Saugströmung (8) zu steuern, so dass die Öffnung (1a) der Sonde (1) so nahe an dem Leck (3a) angebracht wird, dass das Tracergas (4a) den Sensor (5) schnell durch Diffusion erreichen kann, und wenn eine Notwendigkeit für erhöhte Empfindlichkeit gegenüber dem Tracergas besteht, die Saugströmung (8) reduziert wird, wobei die Konzentration des in der Sonde gesammelten Tracergases zunimmt, wenn es nicht mehr in demselben Ausmaß durch Umgebungsluft verdünnt wird, die zusammen mit dem Tracergas (4a) in die Sonde (1) gesaugt wird, und die maximale Konzentration und damit Empfindlichkeit erreicht wird, wenn die Saugströmung (8) durch die Betätigungseinrichtung (11) vollständig abgesperrt wird.

9. Anordnung nach einem der Ansprüche 7 oder 8, **dadurch gekennzeichnet, dass** der Sensor (5) in einem vom Hauptströmungsweg der Strömung getrennten Raum (9) angeordnet ist.

## Revendications

1. Procédé pour le traçage, la détection et la quantification d'une fuite (3a) dans un objet (3) en utilisant un gaz traceur, au moyen duquel l'objet (3) est mis sous pression, une sonde (1) étant utilisée, pourvue d'un orifice, à travers lequel un écoulement d'aspiration (8) est établi qui est capable de fournir un gaz traceur (4a), présent en association avec la fuite (3a), à un capteur (5), qui est configuré pour être sensible au gaz traceur et au moyen duquel la présence de gaz traceur peut être détectée, **caractérisé en ce que** le capteur (5) sensible au gaz traceur est situé dans la sonde (1), si près de l'orifice (1a) que le gaz traceur puisse atteindre le capteur sensible au gaz traceur par diffusion, et dans lequel le procédé comprend en outre la régulation ou l'arrêt de l'écoulement d'aspiration (8).

2. Procédé selon la revendication 1, **caractérisé en ce que**, lorsqu'une sensibilité accrue au gaz traceur est requise, l'orifice (1a) de la sonde (1) est appliqué à une telle proximité de la fuite (3a) que le gaz traceur (4a) puisse atteindre le capteur (5) rapidement par diffusion, et que l'écoulement d'aspiration (8) est ainsi réduit, la concentration en gaz traceur collecté dans la sonde augmentant lorsqu'il n'est plus dilué dans la même mesure par de l'air ambiant air qui est aspiré dans la sonde (1) conjointement avec le gaz traceur (4a), et la concentration, et donc la sensibilité, maximum étant obtenue lorsque l'écoulement d'aspiration (8) est nul.

3. Procédé selon l'une ou l'autre des revendications 1 ou 2, **caractérisé en ce que** le capteur (5) est situé dans un espace (9) séparé du trajet d'écoulement principal de l'écoulement (8), de manière telle que le gaz traceur atteigne le capteur (5) principalement par diffusion à travers la surface de séparation qui sépare l'espace (9) pour le capteur (5) du trajet d'écoulement principal de l'écoulement d'aspiration (8).

4. Procédé selon l'une quelconque des revendications 1 à 3, **caractérisé en ce que** le gaz traceur est de l'hydrogène (H₂).

5. Procédé selon l'une quelconque des revendications 1 à 3, **caractérisé en ce que** le gaz traceur est de l'hélium (He).

6. Procédé selon l'une quelconque des revendications 3 à 5, **caractérisé en ce que** l'écoulement d'aspiration (8) est sensiblement établi de façon concentrique autour de l'axe longitudinal de l'espace (9) entourant le capteur (5).

7. Agencement de détection (1, 2) fonctionnant avec un gaz détecteur et conçu dans le cas d'un objet (3) mis sous pression par le gaz traceur pour détecter, tracer et quantifier une fuite (3a) dans l'objet (3) en établissant une présence accrue externe du gaz traceur en association avec la fuite (3a), comprenant une sonde (1) pourvue d'un orifice, à travers lequel un écoulement d'aspiration (8) est établi qui est capable de fournir un gaz traceur (4a), présent en association avec la fuite (3a), à un capteur (5), qui est sensible au gaz traceur et conçu pour détecter la présence de gaz traceur, **caractérisé en ce que** le capteur (5) sensible au gaz traceur est situé dans la sonde (1), si près de l'orifice (1a) que le gaz traceur puisse atteindre le capteur sensible au gaz traceur par diffusion, et **en ce que** l'agencement comprend en outre un dispositif de fonctionnement (11) agencé pour réguler ou couper l'écoulement d'aspiration (8).

8. Agencement selon la revendication 7, **caractérisé en ce que** l'agencement comprend un dispositif de fonctionnement (11) installé sur ou en association avec la sonde (1) et conçu pour commander l'écoulement d'aspiration (8), pour que l'orifice (1a) de la sonde (1) soit situé à une telle proximité de la fuite (3a) que le gaz traceur (4a) puisse atteindre le capteur (5) rapidement par diffusion, et lorsqu'une sensibilité accrue au gaz traceur est nécessaire, l'écoulement d'aspiration (8) est réduit, la concentration en gaz traceur collecté dans la sonde augmentant lorsqu'il n'est plus dilué dans la même mesure par de l'air ambiant qui est aspiré dans la sonde (1) conjointement avec le gaz traceur (4a), et la concentration, et donc la sensibilité, maximum étant obtenue lorsque l'écoulement d'aspiration (8) est complètement coupé au moyen du dispositif de fonctionnement (11).

9. Agencement selon l'une ou l'autre des revendications 7 ou 8, **caractérisé en ce que** le capteur (5) est situé dans un espace (9) séparé du trajet d'écoulement principal de l'écoulement d'aspiration.
